# EUROPÄISCHE PATENTSCHRIFT

(11) **EP 0 959 685 B1**
(45) Veröffentlichungstag und Bekanntmachung des Hinweises auf die Patenterteilung: **26.03.2003**
(21) Anmeldenummer: 97953894.9
(22) Anmeldetag: 19.12.1997
(51) Int. Cl.: A22C 13/00

(54) **ESSBARE FORMKÖRPER, INSBESONDERE FLACH- UND SCHLAUCHFOLIEN**
EDIBLE MOLDED BODIES, ESPECIALLY FLAT AND FLEXIBLE TUBULAR FILMS
CORPS MOULES COMESTIBLES, NOTAMMENT FILMS PLATS ET TUBULAIRES

(30) Priorität: 07.02.1997 DE 19704737
(43) Veröffentlichungstag der Anmeldung: 01.12.1999
(73) Patentinhaber: Kalle Nalo GmbH & Co. KG, 65203 Wiesbaden (DE)
(72) Erfinder: HAMMER, Klaus-Dieter, D-55120 Mainz (DE); GROLIG, Gerhard, D-64546 Mörfelden-Walldorf (DE); AHLERS, Michael, D-55122 Mainz (DE); DELIUS, Ulrich, D-60529 Frankfurt (DE)
(74) Vertreter: Plate, Jürgen, Dr.
(86) Internationale Anmeldenummer: EP9707212
(87) Internationale Veröffentlichungsnummer: WO98034490

(56) Entgegenhaltungen:
- EP-A- 0 709 030
- EP-A- 0 733 306
- EP-A- 0 820 698
- DE-A- 4 309 528

## Beschreibung

Die Erfindung betrifft eßbare Formkörper auf der Basis von plastifizierbaren Biopolymeren, seinen Spaltprodukten oder Derivaten und/oder synthetischen Polymeren aus natürlichen Monomeren. Sie werden hauptsächlich als Verpackungsfolien und Wursthüllen eingesetzt.

Als eßbare Wursthüllen haben sich bisher neben den Naturdärmen (für Bockwürste vor allem Schafsaitlinge) nur Folien und Schläuche aus Kollagen bewährt (DE-B 17 92 627 und US-A 3 535 125). Eßbare Hüllen auf der Basis von Calcium-alginat (DE-B 12 13 211) haben sich nicht durchsetzen können.

Eßbare Kollagen-Folien und -Schläuche werden nach einem sehr aufwendigen und umweltbelastenden Verfahren aus Rinderhäuten hergestellt. Die Häute werden mit Säuren (z. B. Milchsäure) bis zu den Fibrillen aufgeschlossen; die hochviskose Masse wird extrudiert und mit gasförmigem NH₃ oder mit NH₄OH langsam und kompakt ausgefällt und verfestigt. Beim Trocknen erfolgt dann eine Vernetzung (Härtung), die die Produkte so weit verfestigt, daß sie den Brühprozeß ohne wesentlichen Verlust an mechanischer Stabilität überstehen.

Es ist dagegen nicht gelungen, den Würstchenhüllen auf Alginatbasis die notwendige Stabilität zu verleihen. Bei diesen Hüllen wird durch die Einwirkung des Bräts und der Lake das schwerlösliche Calciumsalz allmählich in das leichtlösliche Natriumsalz der Alginsäure umgewandelt. Die Hüllen verlieren dadurch ihre Festigkeit.

Aus der EP-A 709 030 sind schlauchförmige Wursthüllen auf Basis von thermoplastischer Stärke bekannt. Zu deren Herstellung wird zunächst natürliche Stärke, wie Kartoffel-, Mais- oder Getreidestärke, mit einem Plastifizierungsmittel, wie Wasser, Butan-1,3-diol, Glycerin, Diglycerin, N,N-Dimethyl-harnstoff, Sorbit oder Citrat, plastifiziert, anschließend extrudiert und zu einem Granulat zerkleinert. Nach der Plastifizierung ist die α-Helix-Struktur der Stärke praktisch vollständig aufgehoben. Auch bei längerer Lagerung des Granulats bleibt der amorphe Zustand der Stärke erhalten. Die thermoplastische Stärke (TPS) wird dann in einem weiteren Verarbeitungsschritt mit Verstärkungsfasern, Protein sowie Vernetzungsmitteln vermischt, die Mischung erhitzt, durch eine Ringdüse extrudiert und anschließend blasverformt.

In der DE-A 43 09 528 sind Folien und Folienschläuche aus Casein beschrieben. Zu ihrer Herstellung wird Casein-Pulver vermischt mit einer Lösung, die Wasser, eine teilweise flüchtige Carbonsäure und einen Weichmacher enthält. Nach 30 bis 90 minütigem Quellen wird die wäßrige Mischung bei einer Temperatur von 60 bis 100 °C zu einer Folie oder einem Folienschlauch verformt. Verfestigt wird die Folie oder der Folienschlauch dann durch Behandeln mit einer wäßrigen Härtungslösung und gegebenenfalls durch kalte Räucherung. Das Wasser muß anschließend aus dem Produkt durch Trocknen entfernt werden.

Aufgabe der Erfindung war es, eßbare Formkörper, insbesondere Flach- und Schlauchfolien, zur Verfügung zu stellen, die die oben beschriebenen Nachteile nicht mehr aufweisen. Sie sollen zudem auf einfache, preisgünstige und umweltfreundliche Weise aus natürlichen Rohstoffen herstellbar sein. Für die Verwendung als Wursthüllen sollen die Schlauchfolien zudem die erforderlichen Gebrauchseigenschaften besitzen. Außer den mechanischen, Quellund Schrumpfeigenschaften gehören dazu vor allem eine ausreichende Thermo-, Brüh- und Hydrolysestabilität. Das bedeutet, sie müssen auch gegenüber dem zum Brühen verwendeten heißen Wasser oder Heißdampf ausreichend beständig sein.

Gelöst wird die Aufgabe durch das Bereitstellen eines eßbaren Formkörpers in Gestalt einer Flach- oder Schlauchfolie auf der Basis von plastifizierbaren Biopolymeren bzw. seinen Spaltprodukten oder Derivaten und/oder synthetischen Polymeren aus natürlichen Monomeren, der dadurch gekennzeichnet ist, daß er nach einem Verfahren mit den folgenden Stufen hergestellt ist:
a) Vermischen der Biopolymere, seiner Spaltprodukte oder Derivate und/oder der synthetischen Polymere mit mindestens einem eßbaren Weichmacher, mindestens einem Gleitmittel und mindestens einem Vernetzungsmittel,
b) Aufschmelzen des so erhaltenen Gemisches zu einer thermoplastischen Masse,
c) Extrudieren dieser Masse und
d) Kalandrieren und/oder Verstrecken oder Blasverformen des bei der Extrusion erhaltenen Produkts zu einem eßbaren Formkörper mit einer Dicke von 20 bis 60 µm.

In einer bevorzugten Ausführungsform werden zunächst die Biopolymere, die Spaltprodukte davon und/oder die synthetischen Polymere mit dem Weichmacher und dem Gleitmittel vermischt und zu einer thermoplastischen Masse verarbeitet. Erst anschließend wird diese Masse mit dem Vernetzungsmittel vermischt und extrudiert.

Der eßbare Formkörper kann auch eine andere Gestalt als die einer Flachoder Schlauchfolie haben. An die Stelle der Stufe d) oder zu dieser Stufe hinzu treten dann gegebenenfalls andere Formgebungsverfahren, wie Spritzgießen oder Tiefziehen. Ein Beispiel für einen derart hergestellten Formkörper ist eßbares Geschirr.

Die Verfahrensstufen c) und d) müssen nicht unmittelbar aufeinander folgen. Es ist auch möglich, die extrudierte Masse zwischenzeitlich zu lagern, z. B. in Form eines Granulats. Soweit für den jeweiligen Verwendungszweck wünschenswert oder erforderlich, können die erfindungsgemäßen Flachfolien oder Schläuche noch teilweise oder vollständig thermofixiert werden.

Je nach Form der Düse (ring- oder schlitzförmig) bilden sich beim Extrudieren Platten oder Rohre aus dem thermoplastischen Gemisch, die sich dann durch Kalandrieren und/oder Verstrecken in Längs- und/oder Querrichtung bzw. durch Blasverformen in Flachfolien oder nahtlose Schlauchfolien umwandeln lassen. Soweit erforderlich, wird das Material beim Blasverformen, Kalandrieren oder Verstrecken (erneut) erhitzt. Die erfindungsgemäßen eßbaren Flachoder Schlauchfolien haben allgemein eine Dicke bzw. eine Wandstärke von 20 bis 60 µm, bevorzugt 30 bis 60 µm. Bei den Schlauchfolien nimmt die Wandstärke allgemein mit steigendem Innendurchmesser zu. Durch das Verstrecken oder Blasverformen gewinnt der Formkörper noch an mechanischer Festigkeit.

Der erfindungsgemäße Formkörper hat den besonderen Vorteil, daß er sich besonders umweltfreundlich ohne besondere Fäll- und Waschbäder oder irgendwelche sonstigen Bäder herstellen läßt. In dem Herstellungsverfahren können die allgemein üblichen Vorrichtungen zum Mischen und Extrudieren, insbesondere Kneter und Ein- oder Zweischneckenextruder, eingesetzt werden.

Bevorzugte Beispiele für die plastifizierbaren Biopolymere, für deren ebenfalls plastifizierbare Spaltprodukte oder Derivate und für plastifizierbare synthetische Polymere sind thermoplastische Stärke, Stärkederivate (insbesondere Stärkeester, speziell Stärkeacetate und -propionate; daneben auch Stärkeether, speziell Stärkealkylether), extrudierbare Gelatine und andere natürliche Eiweiße, wie Mais-, Weizen- und Raps-Protein, Casein und deren Derivate, Chitin und Chitosane, Alginsäuren und Alginate, Carrageenan (ein aus Meeresalgen gewonnenes Polysaccharid aus Galaktose), Dextran, Galaktomannane (aus Johannisbrotkernmehl, Guar-Gummi), Pektine (Polygalakturonsäuren und deren Methylester) und Polymilchsäure (= Polylactide). Für die erfindungsgemäßen Formkörper steht somit eine breite Auswahl an Ausgangsmaterialien pflanzlicher und tierischer Herkunft zur Verfügung. Kollagen ist nicht geeignet. Es steht auch nicht in gleichbleibender Qualität zur Verfügung. Der Anteil der Biopolymere bzw. seiner Spaltprodukte oder Derivate und/oder der synthetischen Polymere beträgt allgemein 10 bis 90 Gew.-%, bevorzugt 15 bis 80 Gew.-%, jeweils bezogen auf das Gesamtgewicht des Formkörpers.

Bevorzugt werden zwei oder mehrere der Ausgangsmaterialien gemeinsam verwendet. Sie werden zweckmäßig in einem Doppelschneckenextruder mit einem Weichmacher, einem Plastifizierungsmittel (= Gleitmittel), einem Härter (= Vernetzungsmittel) und gegebenenfalls einem Füllstoff bei höheren Temperaturen durch längeres Kneten gleichmäßig gemischt und plastifiziert.

Als Weichmacher kommen Glyzerin, Diglycerin, Sorbit, Sorbitester, Triglykol, Carboxymethylcellulose und andere lebensmittelrechtlich unbedenkliche, vorzugsweise bereits amtlich zugelassene Verbindungen in Frage. Der Anteil des Weichmachers beträgt allgemein 0,5 bis 50 Gew.-%, bevorzugt 2 bis 25 Gew.-%, jeweils bezogen auf das Gesamtgewicht des Formkörpers.

Als Plastifizier- oder Gleitmittel sind vor allem Pflanzenöle geeignet, insbesondere Sonnenblumen-, Raps-, Oliven- und Mohnöl. Daneben sind auch lebensmittelrechtlich unbedenkliche Verbindungen, wie Lecithine, Acetyl-citronensäure-triethylester, Sucroseester, Lactone (wie 12-Hydroxy-stearinsäurelacton), Lactame und synthetische Triglyceride, verwendbar. Der Anteil an Gleitmittel(n) beträgt allgemein 2 bis 30 Gew.-%, bevorzugt 5 bis 20 Gew.-%, jeweils bezogen auf das Gesamtgewicht des Formkörpers.

Als Härter oder Vernetzungsmittel lassen sich Karamel (karamelisierte Zucker, Maillose), Holzrauchkondensat, Zuckeraldehyde, Dialdehyde (besonders Glyoxal und Glutardialdehyd), Dicarbonsäuren (besonders aliphatische Dicarbonsäuren, wie Oxalsäure, Malonsäure, Adipinsäure und Bernsteinsäure), Dicarbonsäureanhydride (besonders Adipinsäure-essigsäure-anhydrid = Diacetyladipat), Di- oder Triisocyanate (besonders Hexamethylendiisocyanat) und Dioder Triepoxide, Polysaccharidaldehyde (besonders Dialdehydstärke, Dialdehydalginsäure, Dialdehydpektinsäure, Dialdehydtraganthgummi und Dialdehydgummi arabicum) einsetzen. Allgemein sind als Vernetzungsmittel solche Verbindungen geeignet, die mindestens zwei reaktionsfähige Gruppen enthalten. Der Anteil an Vernetzungsmittel(n) beträgt allgemein 0,2 bis 30 Gew.-%, bevorzugt 0,5 bis 25 Gew.-%, besonders bevorzugt 1 bis 10 Gew.-%, jeweils bezogen auf das Gesamtgewicht des Formkörpers.

Für eßbare Folien, die z. B. zum Einwickeln von Kochschinken verwendet werden sollen und somit keiner starken mechanischen Beanspruchung ausgesetzt sind, reichen relativ schwach wirkende Vernetzungsmittel aus, wie Dicarbonsäuren, Zuckeraldehyde (Mono- und Disaccharide) oder Karamel. Würstchenhüllen, die insbesondere beim Füllen einer stärkeren mechanischen Beanspruchung ausgesetzt sind und auch den Brühprozeß unbeschadet überstehen müssen, sollten dagegen wesentlich stärker vernetzt sein, was sich besonders gut durch den Zusatz von mehreren Vernetzungsmitteln erreichen läßt. Dafür sind zusätzlich Dialdehyde, wie Glyoxal oder Glutardialdehyd, Dioder Triisocyanate oder Di- oder Triepoxide heranzuziehen.

Zur Verstärkung der erfindungsgemäßen Formkörper kann das Gemisch gegebenenfalls noch Fasern, bevorzugt Holzzeilstoff-Fasern oder Baumwoll-Linters, und/oder Pigmente - insbesondere anorganische Pigmente wie Calciumcarbonat - enthalten.

Holzzellstoff-Fasern mit einer Länge von 0,2 bis 5 mm, vorzugsweise von 0,5 bis 2 mm, sind besonders geeignet. Der Anteil an Fasern beträgt zweckmäßig 2 bis 30 Gew.-%, vorzugsweise 5 und 20 Gew.-%, jeweils bezogen auf das Gesamtgewicht des Formkörpers.

Die zur Verstärkung dienenden kurzen Zellstoff-Fasern sind zwar nicht verdaubar, als Ballaststoffe jedoch verdauungsfördernd. Sie werden vorzugsweise durch Einsatz von Spezialdüsen in einer kompakten Mittelschicht angeordnet, d. h. in zwei faserfreie Schichten wird eine Schicht aus einem faserhaltigen Polymerbrei extrudiert. Möglich ist allerdings auch, die Fasern über den gesamten Querschnitt zu verteilen, d. h. nur eine faserhaltige Polymermischung zu extrudieren. Häufig ist es vorteilhaft, neben den Fasern noch Füllstoffe, wie Lederspäne, einzuarbeiten.

Als polymeres Ausgangsmaterial besonders bevorzugt sind Mischungen von thermoplastischer Stärke mit einem extrudierbaren Eiweiß, besonders bevorzugt Gelatine. Das Mengenverhältnis von Stärke zu Eiweiß beträgt dabei im allgemeinen 95 : 5 bis 5 : 95. Zur Verbesserung von Feuchte- und Thermostabilität kann zusätzlich Chitosan oder Pektin in einer Menge von 3 bis 30 Gew.-%, bevorzugt von 5 bis 20 Gew.-%, jeweils bezogen auf das Gesamtgewicht der Polymermischung, zugesetzt werden. Eine noch weiter erhöhte mechanische Stabilität läßt sich erreichen, wenn die thermoplastische Stärke ganz oder teilweise durch Stärkeacetat ersetzt wird. Durch Einkneten von 5 bis 25 Gew.-%, vorzugsweise 8 bis 22 Gew.-%, Glycerin (jeweils bezogen auf das Gesamtgewicht) und 2 bis 20 Gew.-%, vorzugsweise 5 bis 15 Gew.-%, eines natürlichen Öls, z. B. Sonnenblumenöl, wird das Gemisch weich- und gleitfähig eingestellt, um das Extrudieren zu vereinfachen.

Zum Härten werden in einer bevorzugten Ausführungsform 0,8 bis 5 Gew.-%, vorzugsweise 1 bis 3 Gew,-%, Karamel, und zusätzlich 0,5 bis 10 Gew.-%, vorzugsweise 1 bis 5 Gew-%, einer Dicarbonsäure, wie Oxalsäure, Malonsäure oder Bernsteinsäure, eingemischt.

Für eßbare Wursthüllen ist der Zusatz von 1 bis 10 Gew.-%, vorzugsweise von 2 bis 6 Gew.-% (bezogen auf Gesamtgewicht aller Komponenten) eines Dialdehyds, wie Glyoxal oder Glutardialdehyd, eines Diisocyanats, wie z. B. Hexamethylendiisocyanat, eines Diketens, eines Diepoxids, eines Lactams oder Lactons (z. B. Gluconsäure-δ-lacton), günstig. Die Mischung wird durch längeres Kneten bei 90 bis 170 °C, vorzugsweise bei 95 bis 150 °C, geschmolzen und gleichmäßig durchmischt. Die Schmelze kann dann entweder sofort extrudiert oder aber für eine spätere Verarbeitung granuliert werden.

Die eßbaren, nahtlosen Schläuche in einem Kaliberbereich von 16 bis 50, vorzugsweise 18 bis 30, werden zweckmäßig durch Extrudieren durch eine Ringdüse, gefolgt von einer Blasverformung, hergestellt. Das Flächenstreckverhältnis bei der Blasverformung liegt allgemein bei 1:5 bis 1:20, bevorzugt bei 1:6 bis 1:10, besonders bevorzugt bei etwa 1:8.

Die Schläuche können dann in einem nachfolgenden Verfahrensschritt innen oder innen und außen präpariert und damit in ihren Eigenschaften weiter modifiziert werden. Insbesondere kann hier eine Nachhärtung erfolgen, die sich sowohl mit Hilfe von ionisierender Strahlung, z. B. mit Röntgenstrahlung, bewirken läßt als auch mit den obengenannten Härtungs- und Vernetzungsmitteln. Diese können dann in Form von Lösungen oder Dispersionen appliziert werden. Die Schläuche werden dann (wie üblich) zwischen zwei Quetschwalzenpaaren im aufgeblasenen Zustand getrocknet. Daran schließt sich ein allgemein bekannter Konfektionierungsschritt an. In der Regel werden die Schläuche abschnittsweise aufgestockt und die dabei erhaltenen Raupen auf üblichen Maschinen verarbeitet. Die nahtlosen Schlauchfolien eignen sich besonders als Wursthüllen, insbesondere für Würstchen. Die erfindungsgemäßen Formkörper sind daneben auch zum Verpacken von anderen Nahrungsmitteln geeignet, z. B. von Käse.

Die breite Basis von natürlichen Ausgangspolymeren, Zusatz- und Vernetzungssubstanzen ermöglicht außerdem eine sehr breite Variation der von Nahrungsmittelhüllen erwarteten Eigenschaften, so daß sich Formkörper exakt ganz spezifischen Anforderungen anpassen lassen, wie die nachfolgenden Beispiele zeigen. Prozente sind Gewichtsprozente, soweit nicht anders angegeben.

### Beispiel 1

### a) Herstellung thermoplastischer Stärke:

100 kg Kartoffelstärke wurden auf einen Wassergehalt von weniger als 0,3 % im Vakuum getrocknet und mit 50 kg Glycerin (99 %ig) in einem Kneter bei 160 bis 190 °C geschmolzen und gut durchmischt; zur Aufhebung der Helixstruktur der Stärke wurde die Schmelze 2 h auf 170 °C gehalten; die Masse wurde danach extrudiert und granuliert. Beim anschließenden Lagern des Granulats blieb die Stärke in amorphem Zustand.

### b) Abmischung und Herstellung einer Folie:

| | |
|---|---|
| 50 kg | des Granulats unter a) (33,3 kg Stärke + 16,7 kg Glycerin) wurden versetzt mit: |
| 25 kg | extrudierbarer Gelatine, |
| 10 kg | Holzzellstoff-Fasern, |
| 2 kg | Sorbit, |
| 4 kg | Malonsäure, |
| 8 kg | Sonnenblumenöl und |
| 1 kg | Karamel |

Das Gemisch wurde in einem Extruder bei 160 °C geschmolzen, gleichmäßig verteilt und durch eine 40 cm Breitschlitzdüse extrudiert, verstreckt (Streckverhältnis in Maschinenrichtung 1: 4, in Querrichtung 1:10), abgekühlt, auf 8 % Feuchtegehalt konditioniert und aufgewickelt. Die Eigenschaften der so hergestellten Folie sind der nachfolgenden Tabelle zu entnehmen:

| Gewicht | Dicke | Reißfestigkeit (trocken) N/mm² | | Reißdehnung in % | | Quellwert |
|---|---|---|---|---|---|---|
| g/m² | µm | längs | quer | längs | quer | % |
| 42 | 35 | 28 | 18 | 15 | 22 | 180 |

Fleischprodukte, insbesondere gekochter Schinken, wurden mit dieser Folie eingeschlagen und mit einem Netz überzogen. Nach dem Kochen ließ sich das Netz problemlos entfernen. Der Kochschinken wurde dann mit der Folienumhüllung aufgeschnitten. Die Folie war sauerstoff- und rauchdurchlässig, aber wenig flüssigkeits- und fettdurchlässig.

### Beispiel 2

| | |
|---|---|
| 40 kg | teilacetylierte Stärke mit einem Substitutionsgrad von 2,2, |
| 25 kg | extrudierbare Gelatine, |
| 5 kg | Chitosan, |
| 20 kg | Glycerin, |
| 3 kg | Karamel, |
| 2 kg | Hexamethylendiisocyanat und |
| 5 kg | Sonnenblumenöl |

wurden gut vermischt. Das Gemisch wurde bei einer Temperatur zwischen 170 und 180 °C geschmolzen, anschließend 30 min. auf 175 °C gehalten und danach durch eine 80 cm Breitschlitzdüse als Folie extrudiert, verstreckt (längs 1:6, quer 1:8), thermofixiert, konditioniert (auf einen Feuchtegehalt von 10 %) und aufgewickelt. Die Eigenschaften der so hergestellten Folie sind der nachfolgenden Tabelle zu entnehmen:

| Gewicht | Dicke | Reißfestigkeit (trocken) N/mm² | | Reißdehnung in % | | Quellwert |
|---|---|---|---|---|---|---|
| g/m² | µm | längs | quer | längs | quer | % |
| 48 | 40 | 35 | 24 | 12 | 26 | 168 |

Die Folie ist zum Umwickeln der unterschiedlichsten Fleischprodukte geeignet und kann mitverzehrt werden.

### Beispiel 3

### a) Herstellung thermoplastischer Stärke:

75 kg Kartoffelstärke wurden auf einen Wassergehalt von weniger als 0,3 % im Vakuum getrocknet, mit 25 kg Glycerin (99 %ig) versetzt und in einem Zweiwellenkneter bei 160 bis 190 °C geschmolzen und gut durchmischt. Die Schmelze wurde danach 2 h lang bei 175 °C gehalten, extrudiert und granuliert.

### b) Abmischung und Herstellung eines Schlauches:

| | |
|---|---|
| 51 kg | des Granulats unter a) wurden versetzt mit: |
| 20 kg | extrudierbarer Gelatine, |
| 10 kg | Chitosan, |
| 10 kg | Sonnenblumenöl, |
| 5 kg | Malonsäure, |
| 2 kg | Glyoxal und |
| 2 kg | Karamel. |

Dieses Gemisch wurde bei 175 °C in einem Extruder geschmolzen, durchmischt und durch eine Ringdüse mit einem Durchmesser von 20 mm extrudiert; zwischen Düse und erster Umlenkwalze wurde der Schlauch durch Aufblasen längs und quer im Verhältnis 1:8 (bezogen auf die Fläche) verstreckt, abgekühlt, flachgelegt und aufgewickelt.

Im gewässerten Zustand hatte der Schlauch einen Platzdruck von 32 kPa und eine statische Dehnung bei 21 kPa von 23 mm. Die Wanddicke betrug 30 µm, das Gewicht 40 g/m². Die Raupen wurden auf einer automatischen Füllmaschine mit Würstchenbrät gefüllt, gebrüht, geräuchert und verpackt.

### Beispiel 4

Eine Mischung aus

| | |
|---|---|
| 30 kg | extrudierbarer Gelatine, |
| 20 kg | Stärkegranulat wie unter 3b), |
| 20 kg | teilacetylierter Stärke (®Sconacell S), |
| 10 kg | Glycerin, |
| 10 kg | Sonnenblumenöl, |
| 5 kg | Glyoxal und |
| 5 kg | Karamel |

wurde aufgeschmolzen. Ein Drittel dieser Schmelze wurde dann in einem getrennten Extruder mit Holzzellstoff-Fasern einer Länge von 0,5 bis 1,5 mm vermischt. Mit Hilfe einer Spezialdüse mit einem Durchmesser von 18 mm wurde dann durch Coextrusion ein dreischichtiger Schlauch hergestellt, dessen innere und äußere Schicht faserfrei war, während die zentrale Schicht faserhaltig war. Die schlauchförmige Hülle enthielt 12 % Fasern, bezogen auf ihr Gesamtgewicht.

Zwischen Düse und Schlauchwalze wurde der Schlauch durch Aufblasen verstreckt, abgekühlt, konditioniert (10 Gew.-% Feuchtegehalt), aufgewickelt und gerafft. Der Schlauch hatte im gewässerten Zustand einen Platzdruck von 36 kPa, eine statische Dehnung bei 21 kPa von 22 mm, eine Wandstärke von 32 µm und ein Gewicht von 38 g/m².

Die Raupen wurden auf automatischen Füllmaschinen mit Würstchenbrät gefüllt, gebrüht und geräuchert.

### Beispiel 5

Eine Schmelze wurde hergestellt aus

| | |
|---|---|
| 30 kg | extrudierbarer Gelatine, |
| 20 kg | teilacetylierter Stärke, |
| 10 kg | Pektin, |
| 20 kg | Glycerin, |
| 10 kg | Olivenöl, |
| 5 kg | Glutardialdehyd und |
| 5 kg | CaCO₃ |

und zu einem Schlauch von Kaliber 20 extrudiert wie in Beispiel 3 beschrieben. Er hatte die gleichen Eigenschaften wie der Schlauch gemäß Beispiel 3.

### Beispiel 6:

| | |
|---|---|
| 50 kg | Kartoffelstärke (nicht getrocknet) wurden mit |
| 10 kg | Wasser und |
| 10 kg | Glycerin |

für 2 Stunden bei 100 bis 120 °C geknetet. Dabei verdampfte ein Großteil des Wassers. Die erhaltene Masse wurde mit 10 kg Glycerin und 1 kg Glyoxal gemischt und bei 140 °C wie oben beschrieben durch eine Ringdüse mit einem Durchmesser von 20 mm extrudiert und blasverformt (Flächenstreckverhältnis: 1:6). Die Eigenschaften der so hergestellten Folie sind der nachfolgenden Tabelle zu entnehmen:

| Gewicht | Dicke | Reißfestigkeit (trocken) N/mm² | | Reißdehnung in % | | Quellwert |
|---|---|---|---|---|---|---|
| g/m² | µm | längs | quer | längs | quer | % |
| 38 | 40 | 32 | 24 | 15 | 20 | 120 |

## Patentansprüche

1. Eßbarer Formkörper in Gestalt einer Flach- oder Schlauchfolie auf der Basis von plastifizierbaren Biopolymeren, seinen Spaltprodukten oder Derivaten und/oder synthetischen Polymeren aus natürlichen Monomeren, **dadurch gekennzeichnet, daß** er nach einem Verfahren mit den folgenden Stufen hergestellt ist:
a) Vermischen der Biopolymere, seiner Spaltprodukte oder Derivate und/oder der synthetischen Polymere mit mindestens einem eßbaren Weichmacher, mindestens einem Gleitmittel und mindestens einem Vernetzungsmittel,
b) Aufschmelzen des so erhaltenen Gemisches zu einer thermoplastischen Masse,
c) Extrudieren dieser Masse und
d) Kalandrieren und/oder Verstrecken oder Blasverformen des bei der Extrusion erhaltenen Produkts zu einem eßbaren Formkörper mit einer Dicke von 20 bis 60 µm.

2. Formkörper gemäß Anspruch 1, **dadurch gekennzeichnet, daß** das plastifizierbare Biopolymer, das daraus gewonnene, ebenfalls plastifizierbare Spaltprodukt bzw. das plastifizierbare synthetische Polymer thermoplastische Stärke, ein Stärkederivat, ein extrudierbares natürliches Protein, Casein oder ein Caseinderivat, Chitin, Chitosan, Alginsäure, Alginat, Carrageenan, Dextran, Galaktomannan, Pektin oder Polymilchsäure ist.

3. Formkörper gemäß Anspruch 1 oder 2, **dadurch gekennzeichnet, daß** der Anteil an plastifizierbarem Biopolymer, seinen Spaltprodukten oder Derivaten und synthetischen Polymeren aus natürlichen Monomeren 10 bis 90 Gew.-%, bevorzugt 15 bis 80 Gew.-%, jeweils bezogen auf das Gesamtgewicht des Formkörpers, beträgt.

4. Formkörper gemäß einem oder mehreren der Ansprüche 1 bis 3, **dadurch gekennzeichnet, daß** der Weichmacher Glyzerin, Diglycerin, Sorbit, Sorbitester, Triglykol oder Carboxymethylcellulose ist.

5. Formkörper gemäß einem oder mehreren der Ansprüche 1 bis 4, **dadurch gekennzeichnet, daß** der Anteil an Weichmacher(n) 0,5 bis 50 Gew.-%, bevorzugt 2 bis 25 Gew.-%, jeweils bezogen auf das Gesamtgewicht des Formkörpers, beträgt.

6. Formkörper gemäß einem oder mehreren der Ansprüche 1 bis 5, **dadurch gekennzeichnet, daß** das Gleitmittel ein Pflanzenöl, wobei Sonnenblumen-, Raps-, Oliven- und Mohnöl/bevorzugt sind, oder ein Lecithin, Acetylcitronensäuretriethylester, ein Sucroseester, ein Lacton, ein Lactam oder ein synthetisches Triglycerid ist.

7. Formkörper gemäß einem oder mehreren der Ansprüche 1 bis 6, **dadurch gekennzeichnet, daß** der Anteil an Gleitmittel(n) 2 bis 30 Gew.-%, bevorzugt 5 bis 20 Gew.-%, jeweils bezogen auf das Gesamtgewicht des Formkörpers, beträgt.

8. Formkörper gemäß einem oder mehreren der Ansprüche 1 bis 7, **dadurch gekennzeichnet, daß** das Vernetzungsmittel Karamel, ein Holzrauchkondensat, ein Zuckeraldehyd, ein Dialdehyd, eine Dicarbonsäure, ein Dicarbonsäureanhydrid, ein Di- oder Triisocyanat, ein Di- oder Triepoxid oder ein Polysaccharidaldehyd ist.

9. Formkörper gemäß einem oder mehreren der Ansprüche 1 bis 8, **dadurch gekennzeichnet, daß** der Anteil an Vernetzungsmittel(n) 0,2 bis 30 Gew.-%, bevorzugt 0,5 bis 25 Gew.-%, jeweils bezogen auf das Gesamtgewicht des Formkörpers, beträgt.

10. Formkörper gemäß einem oder mehreren der Ansprüche 1 bis 9, **dadurch gekennzeichnet, daß** er Fasern, bevorzugt Holzzellstoff-Fasern oder Baumwoll-Linters, enthält.

11. Formkörper gemäß Anspruch 10, **dadurch gekennzeichnet, daß** die Holzzellstoff-Fasern eine Länge von 0,2 bis 5 mm, vorzugsweise von 0,5 bis 2 mm, haben.

12. Formkörper gemäß Anspruch 10 oder 11, **dadurch gekennzeichnet, daß** der Anteil an Fasern 2 bis 30 Gew.-%, bevorzugt 5 und 20 Gew.-%, jeweils bezogen auf das Gesamtgewicht des Formkörpers, beträgt.

13. Formkörper gemäß einem oder mehreren der Ansprüche 1 bis 12, **dadurch gekennzeichnet, daß** er Pigmente enthält.

14. Formkörper gemäß einem oder mehreren der Ansprüche 1 bis 13, **dadurch gekennzeichnet, daß** seine Dicke bzw. Wandstärke 30 bis 60 µm beträgt.

15. Formkörper gemäß einem oder mehreren der Ansprüche 10 bis 12, **dadurch gekennzeichnet, daß** er drei Schichten umfaßt und nur die zentrale Schicht Fasern enthält.

16. Formkörper gemäß einem oder mehreren der Ansprüche 1 bis 15, **dadurch gekennzeichnet, daß** er nachgehärtet ist.

17. Verwendung des Formkörpers gemäß einem oder mehreren der Ansprüche 1 bis 16 zum Verpacken von Nahrungsmitteln, bevorzugt von Fleisch- oder Wurstwaren, besonders bevorzugt als nahtlose Wursthülle.

## Claims

1. An edible shaped body in the form of a flat or tubular film based on plastifiable biopolymers or cleavage products or derivatives thereof and/or synthetic polymers of natural monomers is produced by a process having the following stages:
a) mixing the biopolymers, cleavage products or derivatives thereof and/or the synthetic polymers with at least one edible plasticizer, at least one lubricant and at least one crosslinker,
b) melting the resultant mixture to give a thermoplastic mass,
c) extruding this mass and
d) calendering and/or stretching or blowing the product obtained from the extrusion to give the edible shaped body having a thickness of 20 to 60 µm.

2. The shaped body as claimed in claim 1, wherein the plastifiable biopolymer, the likewise plastifiable cleavage products produced therefrom and/or the plastifiable synthetic polymer is thermoplastic starch, a starch derivative, an extrudable natural protein, casein or a casein derivate, chitin, chitosan, alginic acid, alginate, carrageenan, dextran, galactomannan, pectin or polylactic acid.

3. The shaped body as claimed in claim 1 or 2, wherein the content of plastifiable biopolymer, cleavage products and derivatives thereof and synthetic polymers of natural monomers is from 10 to 90% by weight, preferably from 15 to 80% by weight, in each case based on the total weight of the shaped body.

4. The shaped body as claimed in one or more of claims 1 to 3, wherein the plasticizer is glycerol, diglycerol, sorbitol, sorbitol ester, triglycol or carboxymethylcellulose.

5. The shaped body as claimed in one of more of claims 1 to 4, wherein the content of plasticizer(s) is from 0.5 to 50% by weight, preferably from 2 to 25% by weight, in each case based on the total weight of the shaped body.

6. The shaped body as claimed in one or more of claims 1 to 5, wherein the lubricant is a vegetable oil, preference being given to sunflower seed oil, rapeseed oil, olive oil and poppyseed oil, or a lecithin, triethyl acetylcitrate, a sucrose ester, a lactone, a lactam or a synthetic triglyceride.

7. The shaped body as claimed in one or more of claims 1 to 6, wherein the content of lubricant(s) is from 2 to 30% by weight, preferably from 5 to 20% by weight, in each case based on the total weight of the shaped body.

8. The shaped body as claimed in one or more of claims 1 to 7, wherein the crosslinker is caramel, a wood smoke concentrate, a sugar aldehyde, a dialdehyde, a dicarboxylic acid, a dicarboxylic anhydride, a di- or triisocyanate, a di- or triepoxide or a polysaccharide aldehyde.

9. The shaped body as claimed in one or more of claims 1 to 8, wherein the content of crosslinker(s) is from 0.2 to 30% by weight, preferably from 0.5 to 25% by weight, in each case based on the total weight of the shaped body.

10. The shaped body as claimed in one or more of claims 1 to 9, wherein it comprises fibers, preferably woodpulp fibers or cotton linters.

11. The shaped body as claimed in claim 10, wherein the woodpulp fibers have a length of from 0.2 to 5 mm, preferably from 0.5 to 2 mm.

12. The shaped body as claimed in claim 10 or 11, wherein the content of fibers is from 2 to 30% by weight, preferably from 5 to 20% by weight, in each case based on the total weight of the shaped body.

13. The shaped body as claimed in one or more of claims 1 to 12, wherein it comprises pigments.

14. The shaped body as claimed in one or more of claims 1 to 13, wherein its thickness or wall thickness is from 30 to 60 µm.

15. The shaped body as claimed in one or more of claims 10 to 12, wherein it includes three layers and only the central layer comprises fibers.

16. The shaped body as claimed in one or more of claims 1 to 15, wherein it is post-hardened.

17. The use of the shaped body as claimed in one or more of claims 1 to 16 for packaging foods, preferably meat or sausage products, particularly preferably as a seamless sausage casing.

## Revendications

1. Corps moulé comestible sous la forme d'un film plat ou tubulaire sur la base de biopolymères plastifiables, de leurs produits de décomposition et/ou dérivés, et/ou de polymères synthétiques obtenus à partir de monomères naturels, **caractérisé en ce qu'**il est fabriqué selon un procédé comprenant les étapes suivantes consistant à :
a) mélanger les biopolymères, leurs produits de décomposition ou leurs dérivés, et/ou les polymères synthétiques, avec au moins un plastifiant alimentaire, au moins un agent de démoulage et au moins un agent de réticulation,
b) fondre le mélange ainsi obtenu en une masse thermoplastique,
c) extruder cette masse et
d) laminer et/ou étirer ou former par soufflage le produit obtenu à l'issue de l'extrusion en un corps moulé alimentaire d'une épaisseur de 20 à 60 µm.

2. Corps moulé selon la revendication 1, **caractérisé en ce que** le biopolymère plastifiable, le produit de décomposition également plastifiable qui en résulte, et/ou le polymère synthétique plastifiable, est un amidon thermoplastique, un dérivé d'amidon, une protéine naturelle extrudable, de la caséine ou un dérivé de la caséine, de la chitine, de la chitosane, de l'acide alginique, de l'alginate, du carragaheen, de la dextrane, du galacto-mannane, de la pectine ou de l'acide polylactique.

3. Corps moulé selon les revendications 1 ou 2, **caractérisé en ce que** la teneur en biopolymère plastifiable, en ses produits de décomposition ou ses dérivés, et en polymères synthétiques à base de monomères naturels, est comprise entre 10 et 90 % en poids, de préférence entre 15 et 80 % en poids, sur la base du poids total du corps moulé.

4. Corps moulé selon une ou plusieurs des revendications 1 à 3, **caractérisé en ce que** le plastifiant est de la glycérine, de la diglycérine, du sorbitol, de l'ester de sorbitol, du triglycol ou de la cellulose carboxyméthylique.

5. Corps moulé selon une ou plusieurs des revendications 1 à 4, **caractérisé en ce que** la teneur en plastifiant(s) est comprise entre 0,5 et 50 % en poids, de préférence entre 2 et 25 % en poids, sur la base du poids total du corps moulé.

6. Corps moulé selon une ou plusieurs des revendications 1 à 5, **caractérisé en ce que** l'agent de démoulage est une huile végétale, la préférence étant donnée à l'huile de tournesol, de colza, d'olive et d'oeillette, ou une lécithine, du triéthylester d'acétyle-acide citrique, un ester de sucrose, une lactone, un lactame ou une triglycéride synthétique.

7. Corps moulé selon une ou plusieurs des revendications 1 à 6, **caractérisé en ce que** la teneur en agent(s) de démoulage est comprise entre 2 et 30 % en poids, de préférence 5 à 20 % en poids, sur la base du poids total du corps moulé.

8. Corps moulé selon une ou plusieurs des revendications 1 à 7, **caractérisé en ce que** l'agent de réticulation est du caramel, un condensat de fumée de bois, un aldéhyde de sucre, un acide dicarbonique, un anhydride d'acide dicarbonique, un diisocyanate ou triioscyanate, un diépoxyde ou triépoxyde, ou un polysaccharide-aldéhyde.

9. Corps moulé selon une ou plusieurs des revendications 1 à 8, **caractérisé en ce que** la teneur en agent(s) de réticulation est comprise entre 0,2 et 30 % en poids, de préférence entre 0,5 et 25 % en poids, sur la base du poids total du corps moulé.

10. Corps moulé selon une ou plusieurs des revendications 1 à 9, **caractérisé en ce qu'**il contient des fibres, de préférence des fibres de pâte de bois chimique ou des linters de coton.

11. Corps moulé selon la revendication 10, **caractérisé en ce que** les fibres de pâte de bois chimique ont une longueur de 0,2 à 5 mm, de préférence de 0,5 à 2 mm.

12. Corps moulé selon les revendications 10 ou 11, **caractérisé en ce que** la teneur en fibres est comprise entre 2 et 30 % en poids, de préférence entre 5 et 20 % en poids, sur la base du poids total du corps moulé.

13. Corps moulé selon une ou plusieurs des revendications 1 à 12, **caractérisé en ce qu'**il contient des pigments.

14. Corps moulé selon une ou plusieurs des revendications 1 à 13, **caractérisé en ce** son épaisseur et/ou son épaisseur de paroi est comprise entre 30 et 60 µm.

15. Corps moulé selon une ou plusieurs des revendications 10 à 12, **caractérisé en ce qu'**il comprend trois couches, et que seule la couche centrale contient des fibres.

16. Corps moulé selon une ou plusieurs des revendications 1 à 15, **caractérisé en ce qu'**il est en outre soumis ultérieurement à une étape de durcissement.

17. Utilisation du corps moulé selon une ou plusieurs des revendications 1 à 16, pour le conditionnement de produits alimentaires, de préférence pour le conditionnement de viande ou de saucisses, et avantageusement à titre de boyau sans couture.
